# EUROPÄISCHE PATENTSCHRIFT

(11) **EP 0 943 521 B1**
(45) Veröffentlichungstag und Bekanntmachung des Hinweises auf die Patenterteilung: **04.06.2003**
(21) Anmeldenummer: 99104162.5
(22) Anmeldetag: 02.03.1999
(51) Int. Cl.: B61D 17/04, B62D 27/02, B62D 33/04, F16B 7/04

(54) **Verbindung von Leichtbauprofilen**
Joint for lightweight profiles
Connexion pour profilés légers

(30) Priorität: 20.03.1998 DE 19812338
(43) Veröffentlichungstag der Anmeldung: 22.09.1999
(73) Patentinhaber: SIEMENS AKTIENGESELLSCHAFT, 80333 München (DE)
(72) Erfinder: Altenburg, Klaus, Dr.-Ing., 52146 Würselen (DE); Zimmermann, Michael, Dipl.-Ing., 52066 Aachen (DE)

(56) Entgegenhaltungen:
- EP-A- 0 239 781
- DE-A- 1 950 086
- DE-A- 3 527 238
- US-A- 2 496 032
- US-A- 3 873 219

## Beschreibung

Die Erfindung betrifft eine versenkte Verbindung von zwei langgestreckten Leichtbauprofilen, gemäß dem Oberbegriff des Anspruchs 1.

Aus der US-PS 3, 071, 399 und aus der FR- Patentanmeldung 2 514 435 sind beispielsweise Verbindungen der gattungsbildenden Art entnehmbar, wo jedes der beiden Leichtbauprofile eine durchgängige Querschnittsbohrung aufweist, wo die Querschnittsbohrungen beider Leichtbauprofile miteinander fluchten und ein Spannbolzen hindurchgeführt ist, der auch die Querschnittsbohrung des zweiten Leichtbauprofils durchdringt.

Das Deutsche Patent DE 39 10 644 C2 zeigt zwei Leichtbauprofile mit Rechteckquerschnitt, von denen eines das andere vollständig umhüllt und dabei zwischen Außenseiten des inneren und dem äußeren Rechteckprofil Abstände vorliegen. Beide Rechteckprofile weisen zudem durchgängige Querbohrungen auf, die miteinander fluchten und wo Spannbolzen hindurchgeführt sind.

Aus der US-PS 3, 626, 464 ist eine Baugruppe für den Boden eines Eisenbahnfahrzeugs bekannt geworden. Mehrere offene Profile mit U- Querschnitt sind in Fahrzeuglängsrichtung angeordnet und durchdringen dabei andere offene Profile mit Z-Querschnitt unter einem rechten Winkel. Dabei verlaufen gleichartige Profile zueinander parallel und haben jeweils einen Abstand voneinander, sodass ein Gitterwerk aus Lang- und Querträgem gebildet wird.

Ähnlich ist das bei der Österreichischen Patentschrift Nr. 6697, die einen Bodenbelag für Eisenbahn-Güterwagen zeigt, der aus eisernen Profil-Trägern gebildet ist. Der Bodenbelag besteht aus einer Reihe von U- Trägem mit nach unten weisenden Schenkeln. Die U- Träger sind quer zur Fahrzeuglängsrichtung angeordnet und mit Hilfe von Schraubenbolzen und Distanzrohrstücken auf Längsträgem lösbar befestigt.
Bei modernen Eisenbahnfahrzeugen wie z. B Doppelstock - oder Stadtbahnwagen werden mitunter möglichst niedrige Einstieghöhen angestrebt. Der Absenkung der Einstieghöhen sind jedoch Grenzen gesetzt durch die Mindesthöhe der erforderlichen Langträger des Waggons. Die Erfindung geht deshalb davon aus, zumindest im Einstiegsbereich eines solchen Eisenbahnfahrzeugs die Langträger durch ein Gitterwerk aus Lang - und Querträgem zu ersetzen, welche bei annähernd gleicher Festigkeit jeweils einen gegenüber herkömmlichen Langträgem niedrigeren Querschnitt haben.

Der Erfindung liegt die Aufgabe zugrunde, an den Kreuzungspunkten des Gitterwerks einer Baugruppe für Eisenbahnfahrzeuge zwischen den Lang- und Querträgem eine geeignete, hochfeste Verbindung herzustellen die in der Lage ist, die auftretenden Zug-, Druck-, Scher- und Torsionskräfte sicher zu übertragen. Diese Verbindung soll leicht zugänglich sein und auch die Möglichkeit bieten, dass beispielsweise ein einzelner Querträger zugleich auf mehrere Langträger "aufgefädelt˝ werden kann. Schließlich soll die Verbindung bei Bedarf, im Falle einer notwendigen Reparatur, wieder aufgelöst werden können und die Verbindung soll auch preisgünstig sein.

Gemäß der Erfindung wird die Aufgabe durch die kennzeichnenden Merkmale des Patentanspruchs 1 gelöst.

Das erste, äußere Leichtbauprofil ist also ein Hohlprofil, welches vom zweiten Leichtbauprofil durchdrungen wird. Das zweite Leichtbauprofil kann ebenfalls ein Hohlprofil sein, es kann aber auch ein massives Profil sein. Bevorzugt wird bei beiden Leichtbauprofilen eine rechteckige Querschnittsform. Davon abweichend sind aber auch andere Querschnittsformen, wie z. B. runde, polygonale oder elliptische Querschnitte möglich.

Die umschriebene Querschnittsfläche des ersten Leichtbauprofils ist deutlich größer als die umschriebene Querschnittsfläche des zweiten Leichtbauprofils. Das zweite Leichtbauprofil durchdringt das erste Leichtbauprofil unter einem Winkel, der zwischen 0° und 90° beträgt. Bei einer Durchdringung von beispielsweise 0° erstreckt sich das zweite Leichtbauprofil koaxial entlang des inneren Öffnungsquerschnitts, des ersten Leichtbauprofils. In einem solchen Extremfall ist es präziser zu sagen das erste Leichtbauprofil "umhüllt" das zweite. Bei einer Durchdringung von beispielsweise 90° bilden die Leichtbauprofile miteinander einen rechten Winkel. Diese Anordnung wird regelmäßig bevorzugt.

Zwischen zwei einander gegenüberliegenden Seiten des ersten Leichtbauprofils und den entsprechenden Seiten des zweiten Leichtbauprofils besteht jeweils ein Abstand, der in der Regel auf beiden Seiten gleich groß ist. Davon abweichend können aber auch andere Abstände verwirklicht werden, so dass beispielsweise das durchdringende, zweite Leichtbauprofil zu der einen Seite des ersten Leichtbauprofils einen geringeren Abstand hat als zu der gegenüberliegenden Seite. Auch ist ein Luftspalt vorgesehen, der das zweite, innere Leichtbauprofil an den Stellen der Durchdringung des ersten Leichtbauprofils ringsum umgibt, damit im Bedarfsfall ein einzelnes, Querprofil gleichzeitig und ohne Schwierigkeiten auf mehrere Längsprofile aufgefädelt werden kann, ohne das es dabei zu Verkantungen kommt.

Die Verbindungsorgane mit Schließringbolzen und Zwischenkörper sind so ausgestaltet, dass Höhenabweichungen, die sich fertigungsbedingt zwischen einzelnen Durchdringungsstellen ergeben, sehr genau ausgeglichen werden können. Auch ist vorgesehen, die Querschnittsbohrung des zweiten, inneren Leichtbauprofils mit einer Hülse auszusteifen, damit der Spanndruck des Schließringbolzens nicht dazu führt, dass das zweite Leichtbauprofil Verformungen beim Schließen der Verbindung erleidet.
Nachfolgend wird die Erfindung an zwei Ausführungs- und einem Anwendungsbeispiel näher beschrieben. Es zeigen die
- Fig.1 die Durchdringung zweier Leichtbauprofile in der Seitenansicht,
- Fig.2 die Verbindung der Fig. entlang der Schnittlinie A-A,
- Fig.3 eine vereinfachte Verbindung im Schnitt und
- Fig.4 ein Anwendungsbeispiel für die Verbindungen.

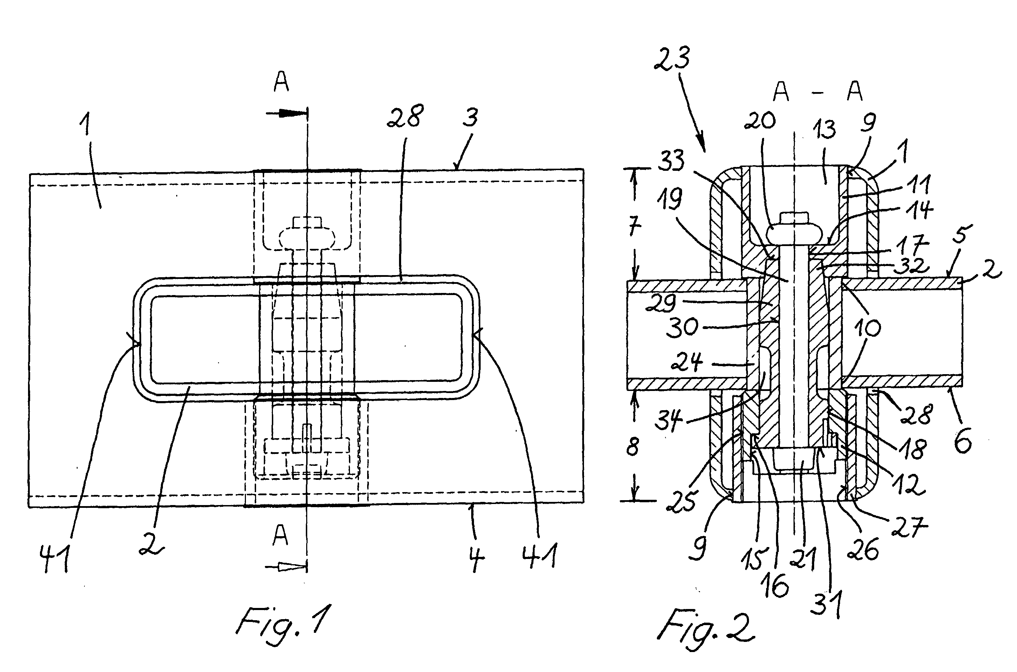

In der Fig.1 wird ein erstes, äußeres Leichtbauprofil 1 von einem zweiten, inneren Leichtbauprofil 2 unter einem rechten Winkel durchdrungen. Die beiden Leichtbauprofile 1 und 2 haben jeweils eine rechteckige Querschnittform, wie das aus der Fig.1 und Fig.2 erkennbar ist. Beide Leichtbauprofile 1 und 2 sind jeweils Hohlprofile. Zwischen dem erste Leichtbauprofil 1 und dem zweiten Leichtbauprofil 2 besteht auf zwei einander gegenüberliegenden Seiten 3 und 4 des ersten Leichtbauprofils 1 jeweils ein Abstand 7 bzw. 8 zu den entsprechenden Seiten 5 und 6 des zweiten Leichtbauprofils 2. Im Normalfall sind die beiden Abstände 7 und 8 gleich groß; sie können aber auch unterschiedlich sein. In den vorliegenden Ausführungsbeispielen der Figuren 1 bis 4 kreuzen die Längsachsen (nicht gezeigt) der beiden Leichtbauprofile 1 und 2 einander unter einem rechten Winkel 22.

Das erste Leichtbauprofil 1 hat eine durchgängige Querschnittbohrung 9 und das zweite Leichtbauprofil 2 eine durchgängige Querschnittsbohrung 10. Die Querschnittsbohrungen 9 und 10 beider Leichtbauprofile 1 und 2 fluchten miteinander. In die Querschnittsbohrung 9 des ersten Leichtbauprofils 1 ist von jeder gegenüberliegenden Seite 3 und 4 her jeweils ein Formkörper 11 und 12 eingeführt. Der Formkörper 11 überbrückt den Abstand 7 und der Formkörper 12 überbrückt einen Abschnitt des Abstandes 8 zwischen den einander entsprechenden Seite 3, 5 bzw. 6, 8 des ersten und zweiten Leichtbauprofils 1 und 2.

Der Formkörper 11 hat eine nach außen weisende Vertiefung 13 mit einer Sitzfläche 14. Dem entsprechend hat auch der Formkörper 12 eine nach außen weisende Vertiefung 15 mit einer Sitzfläche 16. Die beiden Formkörper 11 und 12 haben auch jeweils eine zentrale Bohrung 17 bzw. 18. Durch die zentralen Bohrungen 17 und 18 ist ein Spannbolzen 19 hindurchgeführt, der auch die Querschnittsbohrung 10 des zweiten Leichtbauprofils 2 durchdringt. Mit jeweils einem seiner verbreiterten Enden 20 bzw. 21 sitzt der Spannbolzen 19 auf den Sitzflächen 14 bzw. 16 des zugehörigen Formkörpers 11 bzw. 12 auf und ist daselbst verriegelt.

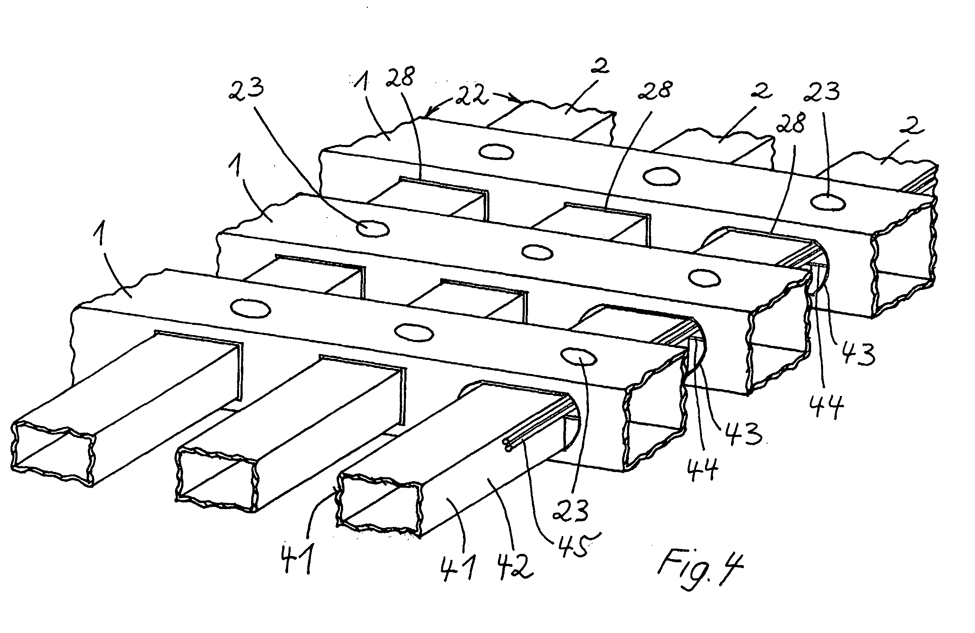

Die Fig.4 zeigt mehrere Leichtbauprofile 1 die von mehreren Leichtbauprofilen 2 unter einem rechten Winkel 22 durchdrungen werden in perspektivischer, nicht maßstäblicher Ansicht. An den Kreuzungspunkten sind die Leichtbauprofile 1 und 2 jeweils durch eine erfindungsgemäße Verbindung 23 miteinander verknüpft. Die Fig.4 bildet einen Ausschnitt aus der Bodengruppe eines Eisenbahnfahrzeugs.

In den vorliegenden Ausführungsbeispielen ist das zweite Leichtbauprofil 2 ebenso ein Hohlprofil wie das erste Leichtbauprofil 1. Beide haben einen rechteckigen Querschnitt und eine Wandstärke, die gegenüber den übrigen Abmessungen der jeweiligen Querschnittsfläche gering ist. Damit beim Schließen der Verbindungen 23 zwischen den Leichtbauprofilen 1 und 2 die Formgestalt des inneren Leichtbauprofils 2 nicht verändert wird, ist das innere Leichtbauprofil 2 zusätzlich mit einer Stützhülse 24 ausgesteift. Die Stützhülse 24 durchdringt die Querschnittsbohrung 10 und ist mit dem Leichtbauprofil 2 fest und unlösbar verbunden. Die Stützhülse 24 schließt bündig mit den einander gegenüberliegenden Seiten 5 und 6 des Leichtbauprofils 2 ab, sie ist mit dem Leichtbauprofil 2 bevorzugt durch Laserschweißung verbunden.

Der Formkörper 12 ist in der Querschnittbohrung 9 zusätzlich längs verschiebbar geführt. Zu diesem Zwecke weist er ein Außengewinde 25 auf, das im Innengewinde 26 einer Hülse 27 gelagert ist, die mit dem ersten Leichtbauprofil 1 fest und unlösbar verbunden ist. Auch hier erfolgt die Verbindung durch Laserschweißung. Der Vorteil der Längsverschiebbarkeit des Formkörpers 12 besteht darin, dass beispielsweise in einem Kreuzungsverband wie er in der Fig. 4 dargestellt ist, fertigungsbedingte Toleranzen zwischen den Leichtbauprofilen 1 und 2 an den Stellen der Verbindungen 23 feinfühlig ausgeglichen werden können. Auch dient die Längsverschiebbarkeit des Formkörpers 12 dazu, dass ein Leichtbauprofil 1 mühelos zugleich auf mehrere Leichtbauprofile 2 aufgefädelt werden kann, indem das innere Ende des Formkörpers 12 während des Auffädelns innerhalb der Hülse 27 verbleibt. Auch ist zum Zweck des Auffädelns ein Luftspalt 28 vorgesehen, der das Leichtbauprofil 2 an den Orten der Durchdringung des Leichtbauprofils 1 ringsum umgibt. Die Breite des Luftspalts 28 beträgt zwischen 0,1 und 2,5 mm.

Zusätzlich ist auch noch ein zylindrischer Zwischenkörper 29 vorgesehen. Der Zwischenkörper 29 hat ebenfalls eine zentrale Längsbohrung 30, durch welche der Spannbolzen 19 auf dem größten Teil seiner Erstreckungslänge hindurchgeführt ist.

Der Zwischenkörper 29 erstreckt sich durch die Querschnittsbohrung 10 des zweiten Leichtbauprofils 2 bzw. durch die Stützhülse 24 hindurch von einem Formkörper 11 zu dem anderen 12. An seinem äußeren Ende hat der Zwischenkörper 29 eine Sitzfläche 31, auf welcher das montageseitige, verbreiterte Ende 21 des Spannbolzens 19 aufliegt.

Das innere Ende 32 des zylindrischen Zwischenkörpers 29 ist kegelstumpfförmig ausgebildet. Es ragt in eine Vertiefung 33 hinein, die auf der Innenseite des Formkörpers 11 ausgespart ist. Der Zwischenkörper 29 ist dazu vorgesehen, die Scherfestigkeit des Spannbolzens 19 wesentlich zu erhöhen. Daran ändert auch eine nutenförmige Ausnehmung 34 nichts, die auf einem Abschnitt des Umfangs des Zwischenkörpers 29 aus Gründen der Gewichtserspamis angebracht ist.

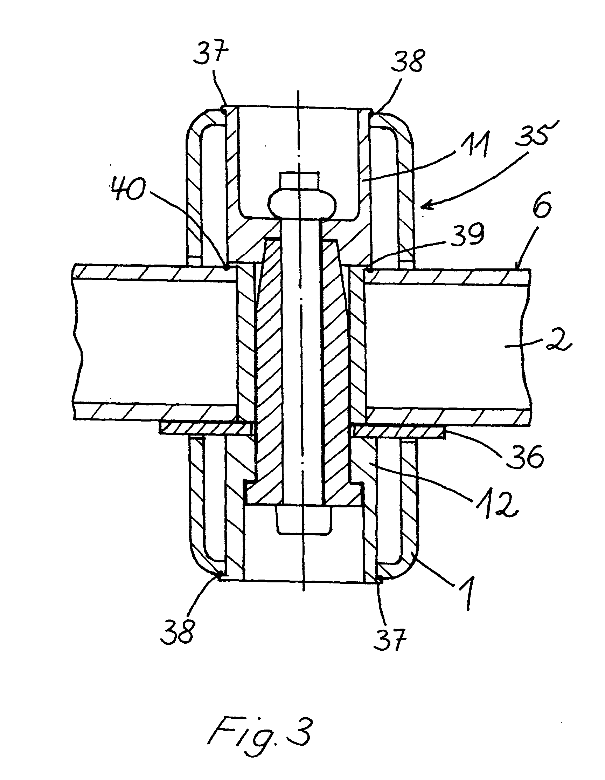

Die Fig.3 zeigt eine Verbindung 35, die gegenüber der Verbindung 23 der Fig.2 wesentlich vereinfacht ist. Anstelle der Längsverschiebbarkeit des Formkörpers 12 ist eine Scheibe 36 getreten, die zwischen dem Formkörper 12 und der Oberseite 6 des Leichtbauprofils 2 während der Montage der Verbindung 35 eingebracht wird. Die Scheibe 36 reicht in den meisten Montagefällen aus, um Abweichungen zwischen einzelnen Befestigungspunkten 23 eines Kreuzverbandes auszugleichen, wie er in der Fig.4 dargestellt ist.

Sehr gut erkennbar ist in der Fig.3 die Befestigung zwischen den Formkörpern 11 bzw. 12 und dem ersten Leichtbauprofil 1. Die beiden Formkörper 11 und 12 weisen beispielsweise an ihren Außenseiten einen kleinen Bund 37 auf, über den sie mit dem Leichtbauprofil 1 durch Laserschweißung ringsum verbunden sind. Die Schweißnähte 38 sollen diese Verbindungen darstellen. Ähnlich ist die Verbindung zwischen der Stützhülse 24 und dem zweiten Leichtbauprofil 2, auch hier ist ein Bund 39 vorgesehen, der beim Verschweißen der Stützhülse 24 mit dem Leichtbauprofil 2 zu einer Schweißnaht 40 degeneriert. Bei der Bildung der Schweißnähte 38 und 40 wird ein Teil der Bünde 37 und 39 jeweils geopfert. Diese in der Fig.3 dargestellte Art der Verbindung gilt auch für die Verbindungen in der Fig. 2.

In der Figur 4 sind die Luftspalte 28 der ersten Leichtbauprofile 1 zu beiden Seiten 41 des vordersten 42 der zweiten Leichtbauprofile 2 jeweils um einen bogenförmigen Ausschnitt 43 erweitert. Der Abstand zur nächstliegenden Seite 41 wird von einem Blech oder Bolzen 44 überbrückt, der als Auflage für Kabel oder Leitungen 45 dient, die entlang dem Leichtbauprofil 42 in die Baugruppe eingezogen wurden.

### Ziffernverzeichnis

- 1: erstes Leichtbauprofil
- 2: zweites Leichtbauprofil
- 3: Seite
- 4: Seite
- 5: Seite
- 6: Seite
- 7: Abstand
- 8: Abstand
- 9: Querschnittsbohrung
- 10: Querschnittsbohrung
- 11: Formkörper
- 12: Formkörper
- 13: Vertiefung
- 14: Sitzfläche
- 15: Vertiefung
- 16: Sitzfläche
- 17: zentrale Bohrung
- 18: zentrale Bohrung
- 19: Spannbolzen
- 20: verbreitertes Ende
- 21: verbreitertes Ende
- 22: rechter Winkel
- 23: Verbindung
- 24: Stützhülse
- 25: Außengewinde
- 26: Innengewinde
- 27: Hülse
- 28: Luftspalt
- 29: zylindrischer Zwischenkörper
- 30: zentrale Bohrung
- 31: Sitzfläche
- 32: inneres Ende des Zwischenkörpers
- 33: Vertiefung
- 34: Ausnehmung
- 35: Verbindung
- 36: Scheibe
- 37: Bund
- 38: Schweißnaht
- 39: Bund
- 40: Schweißnaht
- 41: Seite
- 42: vorderstes Leichtbauprofil
- 43: bogenförmiger Ausschnitt
- 44: Blech oder Bolzen
- 45: Kabel oder Leitung

## Patentansprüche

1. Versenkte Verbindung von zwei langgestreckten Leichtbauprofilen (1,2), bei denen das erste , äußere ein Hohlprofil ist, welches den Querschniff des zweiten, inneren Leichtbauprofils auf einem Abschnitt von dessen Längserstrekkung umhüllt, wobei jedes der beiden Leichtbauprofile eine durchgängige Querschnittsbohrung (9) aufweist und die Querschnittsbohrungen beider Leichtbauprofile miteinander fluchten, zwischen dem ersten und dem zweiten Leichtbauprofil wenigstens auf zwei, einander gegenüberliegenden Seiten des ersten Leichtbauprofils jeweils ein Abstand (7,8) vorliegt und die Längsachsen beider Leichtbauprofile einen Winkel miteinander einschließen, sowie ein Spannbolzen (19) hindurchgeführt ist, der auch die Querschnittsbohrung des zweiten Leichtbauprofils durchdringt, **dadurch gekennzeichnet, dass**
- in die Querschnittsbohrung (9) des ersten Leichtbauprofils (1) von jeder gegenüberliegenden Seite(3,4) her ein Formkörper (11,12) eingeführt ist, der den jeweiligen Abstand (7,8) dieser Seite (3,4) zum zweiten Leichtbauprofil (2) überbrückt, eine nach außen weisende Vertiefung (13,15) mit einer Sitzfläche (14,16) und einer zentralen Bohrung (17,18) aufweist, und der
- Spannbolzen (19) mit jeweils einem seiner verbreiterten Enden (20,21) auf der Sitzfläche (14,16) des zugehörigen Formkörpers (11,12) aufliegt und daselbst verriegelt ist.

2. Verbindung nach Anspruch 1, **dadurch gekennzeichnet, dass** die Längsachsen der beiden Leichtbauprofile (1,2) einen Winkel (22) zwischen 0° und 90° miteinander einschließen.

3. Verbindung nach Anspruch 1 oder 2, **dadurch gekennzeichnet, dass** das zweite Leichtbauprofil (2) ein Hohlprofil ist.

4. Verbindung nach Anspruch 3, **dadurch gekennzeichnet, dass** die Querschnittsbohrung (10) des zweiten Leichtbauprofils (2) von einer Stützhülse (24) durchdrungen wird.

5. Verbindung nach Anspruch 1, **dadurch gekennzeichnet, dass** einer der beiden Formkörper (11,12) in der Querschnittsbohrung (9) des ersten Leichtbauprofils (1) längsverschiebbar geführt ist.

6. Verbindung nach Anspruch 5, **dadurch gekennzeichnet, dass** der Formkörper (12) mit einem Außengewinde (25) versehen ist, das in das Innengewinde (26) einer Hülse (27)eingreift, die sich von der zugehörigen Seite (4) des ersten Hohlprofils (1) über einen Abschnitt des Abstands (8) zwischen der Seite (4) und dem zweiten Leichtbauprofil (2) erstreckt und mit dem ersten Leichtbauprofil (1) fest verbunden ist.

7. Verbindung nach einem der vorhergehenden Ansprüche 1 bis 6, **dadurch gekennzeichnet, dass** ein zylindrischer Zwischenkörper (29) vorgesehen ist, der sich
- durch die Querschnittsbohrung (10) des zweiten Leichtbauprofils (2) hindurch von einem (12) zum anderen Formkörper (11) erstreckt,
- eine zentrale Bohrung (17) aufweist, durch die der Spannbozen (19) hindurchgeführt ist und
- eine Sitzfläche (31) hat, auf der das verbreiterte Ende (21) des Spannbolzens (19) aufliegt.

8. Verbindung nach Anspruch 7, **dadurch gekennzeichnet, dass** das innere Ende (32) des Zwischenkörpers (29) kegelstumpfförmig ausgebildet und in eine Vertiefung (33) eingeführt ist, die auf der Innenseite des gegenüberliegenden Formkörpers (11) ausgespart ist.

9. Verbindung nach Anspruch 1, **dadurch gekennzeichnet, dass** bei einer Durchdringung des ersten Leichtbauprofils (1) durch das zweite (2) zwischen den beiden Leichtbauprofilen (1,2) ein ringsumlaufender Luftspalt (28) besteht, dessen Breite zwischen 0,1 und 2,5mm beträgt.

10. Verwendung einer Verbindung nach einem der Ansprüche 1 bis 9, **dadurch gekennzeichnet, dass** die Verbindung Teil der Struktur eines Bodens eines Eisenbahnwaggons ist.

## Claims

1. Recessed connection of two elongate lightweight profiles (1, 2), in the case of which the first, outer lightweight profile is a hollow profile which encases the cross section of the second, inner lightweight profile over part of the longitudinal extent thereof, it being the case that each of the two lightweight profiles has a continuous cross-sectional bore (9) and the cross-sectional bores of the two lightweight profiles are aligned with one another, a distance (7, 8) is present in each case between the first and the second lightweight profiles, at least on two, mutually opposite sides of the first lightweight profile, and the longitudinal axes of the two lightweight profiles enclose an angle with one another, and a clamping bolt (19) is guided through, this also passing through the cross-sectional bore of the second lightweight profile, **characterized in that**
- a shaped body (11, 12) is introduced into the cross-sectional bore (9) of the first lightweight profile (1) from each opposite side (3, 4), said shaped body spanning the respective distance (7, 8) between this side (3, 4) and the second lightweight profile (2) and having an outwardly oriented depression (13, 15) with a seat surface (14, 16) and a central bore (17, 18), and the
- clamping bolt (19) rests, by way of one of its widened ends (20, 21) in each case, on the seat surface (14, 16) of the associated shaped body (11, 12) and is itself locked there.

2. Connection according to Claim 1, **characterized in that** the longitudinal axes of the two lightweight profiles (1, 2) enclose an angle (22) of between 0° and 90° with one another.

3. Connection according to Claim 1 or 2, **characterized in that** the second lightweight profile (2) is a hollow profile.

4. Connection according to Claim 3, **characterized in that** the cross-sectional bore (10) of the second lightweight profile (2) has a supporting sleeve (24) passing through it.

5. Connection according to Claim 1, **characterized in that** one of the two shaped bodies (11, 12) is guided in a longitudinally displaceable manner in the cross-sectional bore (9) of the first lightweight profile (1).

6. Connection according to Claim 5, **characterized in that** the shaped body (12) is provided with an external thread (25) which engages in the internal thread (26) of a sleeve (27) which extends, from the associated side (4) of the first hollow profile (1), over part of the distance (8) between the side (4) and the second lightweight profile (2) and is fixed to the first lightweight profile (1).

7. Connection according to one of the preceding claims, Claims 1 to 6, **characterized in that** there is provided a cylindrical intermediate body (29) which
- extends through the cross-sectional bore (10) of the second lightweight profile (2) from one shaped body (12) to the other (11),
- has a central bore (17), through which the clamping bolt (19) is guided, and
- has a seat surface (31), on which the widened end (21) of the clamping bolt (19) rests.

8. Connection according to Claim 7, **characterized in that** the inner end (32) of the intermediate body (29) is of frustoconical design and is introduced into a depression (33) which is made on the inside of the opposite shaped body (11).

9. Connection according to Claim 1, **characterized in that**, in the case of the first lightweight profile (1) having the second lightweight profile (2) passing through it, an encircling annular gap (28), of which the width is between 0.1 and 2.5 mm, is produced between the two lightweight profiles (1, 2).

10. Use of a connection according to one of Claims 1 to 9, **characterized in that** the connection is part of the structure of a floor of a railway carriage.

## Revendications

1. Assemblage escamoté de deux profilés (1, 2) légers oblongs, parmi lesquels le premier, extérieur, est un profilé creux qui entoure la section du deuxième profilé léger, intérieur, sur une partie de l'étendue longitudinale de ce dernier, chacun des deux profilés légers comportant un perçage (9) de section traversant et les perçages de section des deux profilés légers étant mutuellement alignés, une distance (7, 8) respective existant entre le premier et le deuxième profilé léger au moins sur deux côtés mutuellement opposés du premier profilé léger et les axes longitudinaux des deux profilés légers faisant un angle entre eux, et un boulon (19) de serrage étant passé à travers, boulon qui traverse également le perçage de section du deuxième profilé léger, **bcaractérisé en ce que**
- un corps (11, 12) façonné est introduit dans le perçage (9) de section du premier profilé (1) léger par chaque côté (3, 4) opposé, corps qui comble la distance (7, 8) respective entre ce côté (3, 4) et le deuxième profilé (2) léger, et qui comporte un renfoncement (13, 15) dirigé vers l'extérieur et pourvu d'une face (14, 16) d'assise, et un perçage (17, 18) central, et
- le boulon (19) de serrage repose par chacune de ses extrémités (20, 21) élargies sur la face (14, 16) d'assise du corps (11, 12) façonné associé, et y est verrouillé.

2. Assemblage suivant la revendication 1, **caractérisé en ce que** les axes longitudinaux des deux profilés (1, 2) légers forment entre eux un angle (22) compris entre 0° et 90°.

3. Assemblage suivant la revendication 1 ou 2, **caractérisé en ce que** le deuxième profilé (2) léger est un profilé creux.

4. Assemblage suivant la revendication 3, **caractérisé en ce que** le perçage (10) de section du deuxième profilé (2) léger est traversé par une douille (24) de soutien.

5. Assemblage suivant la revendication 1, **caractérisé en ce qu'**un des deux corps (11, 12) façonnés est guidé à déplacement longitudinal dans le perçage (9) de section du premier profilé (1 ) léger.

6. Assemblage suivant la revendication 5, **caractérisé en ce que** le corps (12) façonné est pourvu d'un filetage (25) extérieur qui s'engage dans le filetage (26) intérieur d'une douille (27), qui s'étend depuis le côté (4) associé du premier profilé (1) creux sur une partie de la distance (8) entre le côté (4) et le deuxième profilé (2) léger, et qui est fixement assemblée au premier profilé (1) léger.

7. Assemblage suivant l'une des revendications précédentes 1 à 6, **caractérisé en ce qu'**il est prévu un corps (29) intermédiaire cylindrique, qui
- s'étend à travers le perçage (10) de section du deuxième profilé (2) léger depuis un corps (12) façonné jusqu'à l'autre corps (11) façonné,
- comporte un perçage (17) central à travers lequel est passé le boulon (19) de serrage, et
- possède une face (31) d'assise sur laquelle repose l'extrémité (21) élargie du boulon (19) de serrage.

8. Assemblage suivant la revendication 7, **caractérisé en ce que** l'extrémité (32) intérieure du corps (29) intermédiaire est réalisée tronconique et est introduite dans un renfoncement (33) qui est évidé sur le côté intérieur du corps (11 ) façonné opposé.

9. Assemblage suivant la revendication 1, **caractérisé en ce que**, dans le cas du passage du premier profilé (1) léger à travers le deuxième (2), il existe entre les deux profilés (1, 2) légers un espace (28) d'air annulairement entourant dont la largeur est comprise entre 0,1 et 2,5 mm.

10. Utilisation d'un assemblage suivant l'une des revendications 1 à 9, **caractérisée en ce que** l'assemblage fait partie de la structure du plancher d'un wagon ferroviaire.
